**Europäisches Patentamt**

**European Patent Office**

**Office européen des brevets**

(19)

(11) Veröffentlichungsnummer : **0 007 556**
**B1**

(12) **EUROPÄISCHE PATENTSCHRIFT**

(45) Veröffentlichungstag der Patentschrift :
09.09.81

(21) Anmeldenummer : **79102491.2**

(22) Anmeldetag : **17.07.79**

(51) Int. Cl.³ : **B 29 D 23/00**, B 29 C 17/07

(54) Vorrichtung zur Herstellung von Rohren aus thermoplastischem Kunststoff mit Querprofilierung.

(30) Priorität : **22.07.78 DE 2832350**

(43) Veröffentlichungstag der Anmeldung :
**06.02.80 (Patentblatt 80/03)**

(45) Bekanntmachung des Hinweises auf die Patenterteilung : **09.09.81 Patentblatt 81/36**

(84) Benannte Vertragsstaaten :
**AT BE CH DE FR GB IT NL SE**

(56) Entgegenhaltungen :
**DE - A - 1 918 336**
**DE - A - 2 061 027**

(73) Patentinhaber : **Hegler, Wilhelm**
**Goethestrasse 2**
**D-8730 Bad Kissingen (DE)**

(72) Erfinder : **Hegler, Wilhelm**
**Goethestrasse 2**
**D-8730 Bad Kissingen (DE)**
Erfinder : **Hegler, Ralph-Peter, Dipl.-Ing.**
**Goethestrasse 2**
**D-8730 Bad Kissingen (DE)**

(74) Vertreter : **Rau, Manfred, Dr. Dipl.-Ing.**
**Postfach 91 04 80 Lange Zeile 30**
**D-8500 Nürnberg 91 (DE)**

## Vorrichtung zur Herstellung von Rohren aus thermoplastischem Kunststoff mit Querprofilierung

Die Erfindung betrifft eine Vorrichtung gemäß dem Oberbegriff des Patentanspruches 1.

Kunststoffrohre mit Querprofilierung, insbesondere ring- oder schraubenlinienförmigen Querwellen, werden in der Regel in bekannter Weise auf Vorrichtungen hergestellt, bei denen das Rohr im plastischen Zustand aus einer Spritzdüse austritt. Diese Vorrichtungen weisen im Anschluß an die Spritzdüse in zwei einander gegenüberliegenden Reihen angeordnete, im Kreislauf geführte Formabschnittshälften auf, die sich paarweise entlang einer geraden Formstrecke zu einer geschlossenen Hohlform ergänzen, welche an ihrer Innenseite die Querprofilierung formende Arbeitsflächen aufweist. Dabei wird das Rohr entweder durch inneren Überdruck oder durch Absaugen der Luft von außen zum Anlegen an die Arbeitsflächen der Form gebracht. Nachdem das Rohr durch Abkühlung genügend erhärtet ist, öffnen sich die Formabschnitte durch Auseinanderfahren der Formabschnittshälften. Diese Formabschnittshälften werden auf einer Rücklaufstrecke an den Anfang der Formstrecke zurückgeführt.

Es sind aus der DE-OS 20 61 027 (entsprechend US-PS 3 776 679) Vorrichtungen bekannt, bei denen die Formabschnittshälften mittels Verbindungslaschen und Bolzen jeweils zu einer endlosen Kette verbunden sind, die über Umlenkräder geführt ist. Bei diesen bekannten Vorrichtungen wird eine relativ große Anzahl von Formhälften benötigt, von denen sich jeweils nur der kleinere Anteil auf der Formstrecke befindet, während sich der Rest zwischen der Öffnungsstelle und der Schließstelle der Formstrecke auf der Rücklaufstrecke und den kreisbogenförmigen Umlenkungsbereichen zur Formstrecke hin und von der Formstrecke weg befindet.

Aus der DE-OS 19 18 336 (entsprechend GB-PS 1 231 682) ist weiterhin eine Vorrichtung gemäß dem Oberbegriff des Patentanspruches 1 bekannt, bei der die aufeinanderfolgenden Formabschnittshälften nicht miteinander verbunden sind und bei der jede Formabschnittshälfte einer Reihe am hinteren Ende der Formstrecke an einem quer zur Bewegungsrichtung der Formstrecke bewegbaren Kraftzylinder angekoppelt, aus der Formstrecke herausgezogen, auf die Rücklaufstrecke umgesetzt und wiederabgekoppelt wird. Auf der Rücklaufstrecke werden die Formabschnittshälften dann in einer dicht stehenden Reihe mittels eines weiteren Kraftzylinders in einer intermittierenden Bewegung zurückgeschoben, wobei jeweils die vorderste Formabschnittshälfte auf der Rücklaufstrecke an einem weiteren Kraftzylinder angekoppelt, auf die Formstrecke zurückgeschoben und an die jeweils vorlaufende Formabschnittshälfte angesetzt wird. Mit dieser bekannten Vorrichtung kann eine gewisse Einsparung an Formabschnittshälften erzielt werden, da die bei den an einer Kette laufenden Formabschnittshälften notwendigen Umlenkbereiche entfallen.

Es hat sich nun herausgestellt, daß für die Herstellung von Kunststoffrohren mit immer größer werdenden Rohrdurchmessern — beispielsweise ab 250 mm Außendurchmesser — die Fertigung der Formen bzw. der einzelnen Formabschnittshälften, die sehr exakt gefertigt sein müssen, außerordentlich hohe Kosten verursacht.

Der Erfindung liegt daher die Aufgabe zugrunde, eine Vorrichtung gemäß dem Oberbegriff des Patentanspruches 1 so auszubilden, daß jeweils nur eine möglichst geringe Gesamtanzahl von im Kreislauf geführten Formabschnittshälften erforderlich ist.

Diese Aufgabe wird bei einer Vorrichtung gemäß dem Oberbegriff des Patentanspruches 1 durch die Merkmale des Kennzeichnungsteiles des Patentanspruches 1 gelöst. Der Grundgedanke der Erfindung besteht also darin, daß die Formabschnittshälften auf der Rücklaufstrecke voneinander getrennt und mit einer solchen mittleren Geschwindigkeit zurückgeführt werden, daß die Rückführungszeit für jede Formabschnittshälfte kleiner ist als der Zeitabschnitt, den eine Formabschnittshälfte auf der Formstrecke zur Weiterbewegung um eine ihrer Länge entsprechende Strecke benötigt. Hierdurch werden gegenüber der Vorrichtung nach der DE-OS 19 18 336 (entsprechend GB-PS 1 231 682) eine erhebliche Anzahl von Formabschnittshälften eingespart und zwar fast 50 %. Die Zahl der erforderlichen Formabschnittshälften ist auf das geringstmögliche Maß zurückgefürt.

Es befindet sich maximal auf jeder Rücklaufstrecke jeweils nur eine Formabschnittshälfte, die in einer kontinuierlichen, beschleunigten und wieder abgebremsten Bewegung zum vorderen Ende der Formstrecke zurückgeführt wird. Ein weiterer Vorteil der erfindungsgemäßen Vorrichtung besteht darin, daß infolge der geringen Anzahl der benötigten Formabschnittshälften die Vorrichtung rasch und ohne große Aufwand auf einen anderen Rohrdurchmesser umgerüstet werden kann, was wiederum bei der Herstellung von Rohren mit sehr großem Rohrdurchmesser besonders wichtig ist, da derartige Rohre im allgemeinen nur in verhältnismäßig' geringer Menge hergestellt werden, so daß es nicht zweckmäßig ist, für jeden Rohrdurchmesser eine vollständige Vorrichtung bereit zu stellen. Weiterhin bringt die erfindungsgemäße Vorrichtung Ersparnisse bei der Herstellung von Sonderformen für Rohre, sowie bei der Herstellung von Übergangsstücken, Muffen usw., da auch für diese Sonderformen nur eine sehr begrenzte Anzahl der teueren Formabschnittshälften bereit gehalten werden muß.

Weitere Merkmale und Vorteile der Erfindung ergeben sich aus den Unteransprüchen und der nachfolgenden Beschreibung eines Ausführungsbeispieles anhand der Zeichnung. In der Zeichnung zeigt

Fig. 1 eine den Grundgedanken der Erfindung erläuternde schematische Darstellung einer Vorrichtung nach der Erfindung in Draufsicht,

Fig. 2 eine Vorrichtung nach der Erfindung in detaillierter Darstellung in Draufsicht,

Fig. 3 einen vertikalen Querschnitt entsprechend der Schnittlinie III-III in Fig. 2 in gegenüber Fig. 2 vergrößerter Teildarstellung,

Fig. 4 eine Einzelheit der Vorrichtung nach Fig. 2 im Vertikalschnitt gemäß der Schnittlinie IV-IV in Fig. 2,

Fig. 5 einen Teilschnitt gemäß der Schnittlinie V-V in Fig. 2,

Fig. 6 einen Teilschnitt gemäß der Schnittlinie VI-VI in Fig. 2 und

Fig. 7 einen Teilschnitt gemäß der Schnittlinie VII-VII in Fig. 2.

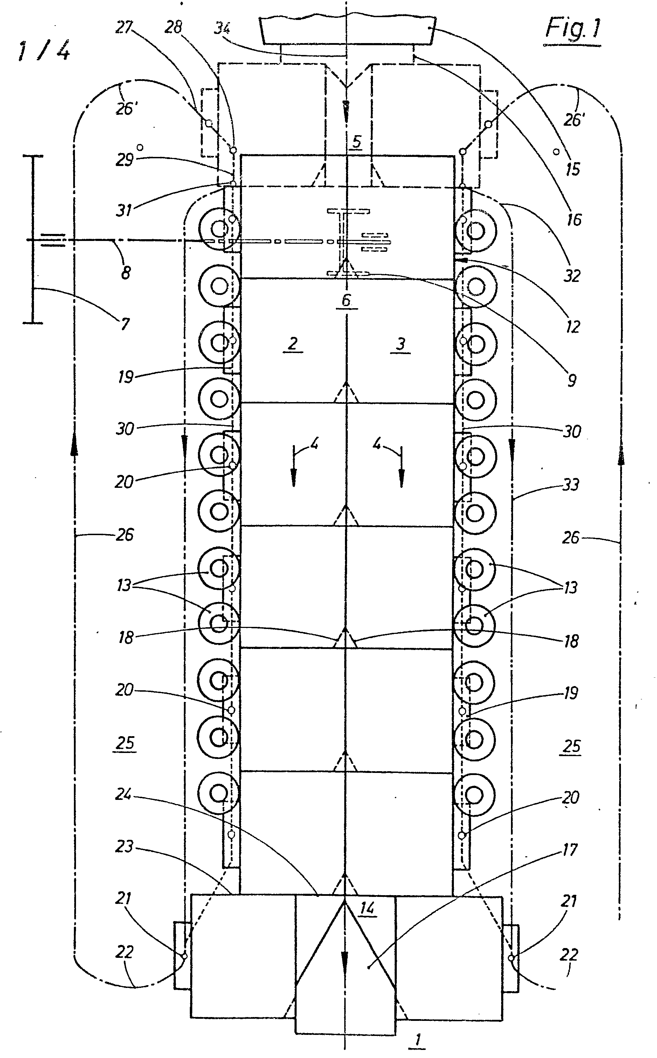

Wie aus der schematischen Darstellung in Fig. 1 hervorgeht, weist die dort dargestellte Vorrichtung eine Grundplatte 1 auf, auf der unter Bildung einer Formstrecke sich eine Form befindet. Diese Form wird durch Formabschnitte gebildet, die wiederum aus jeweils zwei Formabschnittshälften 2, 3 bestehen. Solange die Formabschnittshälften 2, 3 jeweils paarweise unter Bildung eines Formabschnitts aneinanderliegen und solange benachbarte Formabschnitte unter Bildung der Form aneinanderliegen, bewegen sie sich geradlinig entsprechend den Richtungspfeilen 4 auf der Grundplatte 1. Zum kontinuierlichen Antrieb dieser insgesamt sieben Formabschnitte bzw. vierzehn Formabschnittshälften 2, 3 in Richtung 4 ist unmittelbar hinter dem in Bewegungsrichtung 4 vorderen Ende 5 des die Form 6 aufnehmenden Abschnitts der Grundplatte 1 unterhalb dieser Grundplatte 1 eine über ein Antriebsrad 7 angetriebene Antriebswelle 8 angeordnet, an der eine Antriebsritzel 9 drehfest angebracht ist, das durch eine entsprechende Ausnehmung 10 in der Grundplatte 1 hindurchragt und in an der jeweiligen Unterseite der Formabschnittshälften 2, 3 ausgebildete Zähne 11 eingreift.

Die geradlinige Führung der Formabschnittshälften 2, 3 entsprechend dem Richtungspfeil 4 und deren paarweise Zusammenpressung senkrecht zu dieser Bewegungsrichtung 4 erfolgt auf dem die Formstrecke 12 bildenden Abschnitt der Grundplatte 1 durch Führungsrollen 13. Infolge des Antriebs des jeweils im Bereich des vorderen Endes 5 der Formstrecke 12 befindlichen Formabschnitts 2, 3 werden sämtliche in Bewegungsrichtung 4 davor angeordneten Formabschnittshälften 2, 3 bis zum hinteren Ende 14 der Formstrecke 12 weitergeschoben.

Die aufgrund des Aneinanderliegens der Formabschnittshälften 2, 3 an ihrem Umfang geschlossene, aber an ihren Enden offene hohle Form 6 nimmt ein aus einer nur angedeuteten Spritzdüse 15 einer Kunststoffspritzmaschine austretendes noch plastisches Rohr 16 auf, das in dieser Form 6 während deren Bewegung in Richtung 4 mit Querrillen versehen wird, wie es beispielsweise aus der DE-OS 20 61 027 (entsprechend US-PS 3 776 679) bekannt ist.

Am hinteren Ende 14 der Formstrecke 12 ist eine Keilplatte 17 angeordnet, die mit an der jeweiligen — in Bewegungsrichtung 4 gesehen — vorderen Innenkante der Formabschnittshälften 2, 3 angeordneten Schrägflächen 18 zusammenwirkt, so daß DIE Formabschnittshälften 2, 3 eines Formabschnittes beim Auftreffen auf die Keilplatte 17 quer zur Bewegungsrichtung 4 auseinandergeschoben werden.

An den den Anlageflächen entgegengesetzten Außenseiten der Formabschnittshälften 2, 3 sind Spannprismen 19 angebracht, an die jeweils eine in Fig. 1 nicht dargestellte Rückführungsvorrichtung angekoppelt werden können. Zum besseren Verständnis der Wirkungsweise der Vorrichtung ist in Fig. 1 jeweils ein Punkt 20 an jedem Spannprisma 19 angedeutet, dessen Bewegungsbahn dargestellt ist.

Sobald sich beim Auseinanderrücken der Formabschnittshälften 2, 3 am hinteren Ende 14 der Formstrecke 12 der jeweilige Punkt 20 in einer Position 21 befindet, werden die beiden entsprechenden Formabschnittshälften 2, 3 an die erwähnte, in Fig. 1 nicht dargestellte Rückführungsvorrichtung angekoppelt und seitlich auf einem in Bewegungsrichtung 4 gekrümmten Bahnabschnitt 22 aus der Formstrecke 12 herausgezogen. Die Krümmung dieses Bahnabschnittes 22 in Bewegungsrichtung 4 der Form ist deshalb notwendig, weil zu Beginn dieser Herausziehbewegung die rückwärtigen Stirnseiten 23 der Formabschnittshälften 2, 3 noch gegen die vorderen Stirnseiten 24 der nachfolgenden Formabschnittshälften 2, 3 anliegen, sich also mit diesen in Bewegungsrichtung 4 bewegen. Wenn zwei in Bewegungsrichtung aufeinanderfolgende Formabschnittshälften 2 bzw. 3 außer Anlage gegeneinander gebracht worden sind, dann kann — wie aus Fig. 1 ersichtlich — der Bahnabschnitt 22 nach rückwärts gekrümmt sein.

Anschließend werden die beiden Formabschnittshälften 2 und 3 auf einer jeweils seitlich von der Formstrecke 12 auf der Grundplatte 1 ausgebildeten Rücklaufstrecke 25 zurückgeführt. Wegen der Symmetrie der Vorrichtung werden die beiderseits der Formstrecke 12 befindlichen Teile oder Einrichtungen aus Übersichtlichkeitsgründen jeweils mit gleichen Bezugsziffern bezeichnet, auch wenn sie jeweils spiegelsymmetrisch zueinander ausgebildet bzw. angeordnet sind.

Auf dieser Rücklaufstrecke 25 wird die Formabschnittshälfte 2 bzw. 3 geradlinig entsprechend dem strichpunktiert dargestellten geradlinigen Bahnabschnitt 26 bis neben das vordere Ende 5 der Formstrecke 12 zurücktransportiert. Am Ende dieses geradlinigen Bahnabschnittes 26 schließt sich ein kreisabschnittsförmig gekrümmter Bahnabschnitt 26' an, auf dem sich der jeweilige Punkt 20 einer Formabschnittshälfte 2 bzw. 3 bewegt. Die Krümmung dieses Bahnabschnittes 26' verläuft entgegen der Bewegungsrichtung 4.

An diesen gekrümmten Bahnabschnitt 26' schließt sich jeweils ein geradliniger Bahnabschnitt 27 an, der unter einem spitzen Winkel zur Bewegungsrichtung 4 der Form 6 auf der Formstrecke 12 steht. Auf dem gekrümmten Bahnabschnitt 26' und dem geradlinig verlaufenden Bahnabschnitt 27 werden die Formabschnittshälften 2, 3 wieder unter Bildung des — in Bewegungsrichtung 4 gesehen — ersten Formabschnitts der Form 6 zusammengeführt. Diese Wiederzusammenführung ist am inneren Endpunkt 28 des Bahnabschnitts 27 abgeschlossen. Über einen kurzen Bahnabschnitt 29, auf dem der jeweilige Punkt 20 sich bereits auf der geradlinigen Bewegungsbahn 30 in Bewegungsrichtung 4 der Form befindet, die in Fig. 1 gestrichelt dargestellt ist, ist die jeweilige Rückführungsvorrichtung noch an das jeweilige Spannprisma 19 angekoppelt, bis nämlich die Führungsrollen 13 an den zugeordneten Außenseiten der Formabschnittshälften 2, 3 zur Anlage kommen. Am Endpunkt 31 dieses Bahnabschnitts 29 wird die Rückführungsvorrichtung abgekoppelt, deren Koppelorgan dann auf dem gekrümmten Bahnabschnitt 32 aus der Bewegungsbahn 30 seitlich herausgefahren und dann geradlinig auf dem Bahnabschnitt 33 zur Position 21 bewegt wird.

Wie weiter unten noch näher erläutert wird, erfolgt die Bewegung der Formabschnittshälften 2 bzw. 3 auf der jeweiligen Rücklaufstrecke 25 auf dem geradlinigen Bahnabschnitt 26 zunächst beschleunigt, wird dann kurz vor Erreichen des gekrümmten Bahnabschnitts 26' abgebremst, bis sie auf dem geradlinigen Bahnabschnitt 27 die normale Bewegungsgeschwindigkeit der Formabschnittshälften 2 bzw. 3 auf der Formstrecke 12 wieder erreicht hat. Wenn die jeweilige Formabschnittshälfte 2, 3 die in Fig. 1 gestrichelt dargestellte Stellung am vorderen Ende 5 der Formstrecke 12 erreicht hat, legt sich ihre vorlaufende (vordere) Stirnseite 24 gegen die zugeordnete rückwärtige Stirnseite 23 der jeweils in Bewegungsrichtung 4 vorlaufenden Formabschnittshälfte an. Bis zum Erreichen des Endpunktes 28 des Bahnabschnittes 27 werden die beiden jeweiligen Formabschnittshälften 2, 3 dann nur noch zur Mittelachse 34 der Formstrecke 12 beigeschoben. Bevor der jeweilige Punkt 20 dann den Endpunkt 31 des Bahnabschnittes 29 erreicht, wo das Koppelorgan der Rückführungsvorrichtung vom jeweiligen Spannprisma 19 abgekoppelt wird, greift das Antriebsritzel 9 in die zugeordneten Zähne 11 an der Unterseite der Formabschnittshälften 2, 3 ein, wodurch das Zahnritzel 9 dem Vortrieb dieser beiden Formabschnittshälften 2 und damit aller in Bewegungsrichtung davor befindlichen Formabschnitte in Bewegungsrichtung 4 übernimmt. Nach dem Abkoppeln der Rückführungsvorrichtungen laufen diese entlang dem jeweiligen Bahnabschnitt 33 beschleunigt zur Position 21 zurück, die sie erreichen müssen, bevor der nächste Formabschnitt, von der Keilplatte 17 auseinandergeschoben, die Position 21 erreicht. Wie aus Fig. 1 ersichtlich ist, befinden sich jeweils höchstens die beiden Formabschnittshälften 2, 3 eines Formabschnitts auf den Rücklaufstrecken 25, so daß für die Vorrichtung zur Bildung einer Form 6 nur jeweils ein Formabschnitt mehr erforderlich ist als jeweils in der Form 6 befindlich ist.

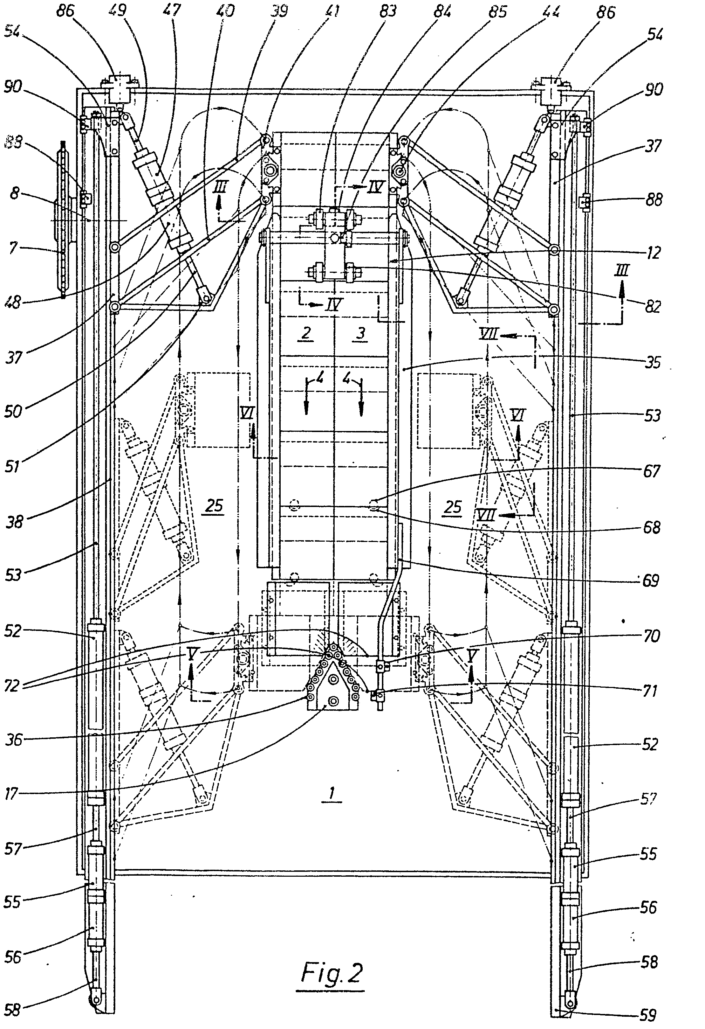

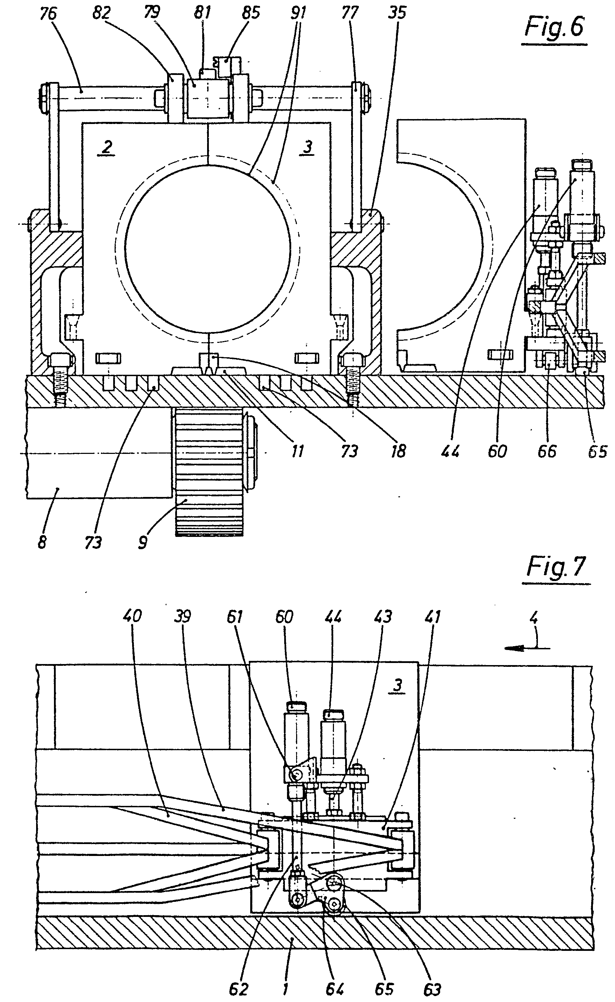

In den Fig. 2 bis 7 ist zur Erläuterung weiterer Einzelheiten, insbesondere im Hinblick auf die Rückführungsvorrichtungen, eine im Prinzip mit Fig. 1 übereinstimmende Vorrichtung ausführlicher dargestellt. Dabei ist die Ausführungsform nach den Fig. 2 bis 7 insoweit gegenüber der Ausführungsform nach Fig. 1 verändert, als die Führung und Zusammenpressung der Formabschnittshälften 2, 3 auf der Formstrecke 12 nicht durch Führungsrollen, sondern durch Führungsleisten 35 erfolgt. Selbstverständlich können auch bei der Ausführungsform nach den Fig. 2 bis 7 an dieser Stelle Führungsrollen 13 angeordnet sein. Die Keilplatte 17 weist — wie aus Fig. 2 ersichtlich ist — an den Keilflächen Rollen 36 auf, die zur Verminderung der Reibung zwischen Formabschnittshälfte 2 bzw. 3 einerseits und Keilplatte 17 andererseits beim Auseinanderführen der Formabschnittshälften 2, 3 gegen die Schrägflächen 18 zur Anlage kommen.

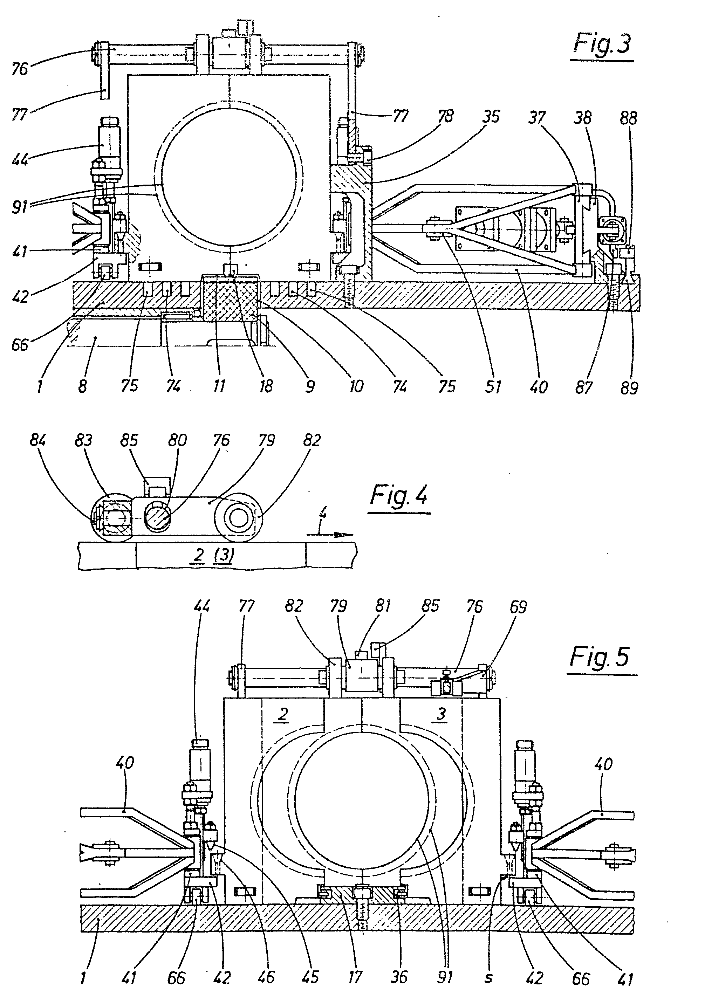

Die Rückführungsvorrichtungen sind — wie bereits erwähnt — beiderseits der Formstrecke 12 angeordnet. Jede Rückführungsvorrichtung weist einen Schlitten 37 auf, der an einer längs der Rücklaufstrecke 25 angeordneten Laufschiene 38 geführt ist. Wie aus Fig. 3 hervorgeht, ist die Laufschiene 38 mit einem Schwalbenschwanzprofil versehen, auf dem der Schlitten 37 mit einer entsprechend angepaßten Ausnehmung gleitend verschiebbar angeordnet ist. Selbstverständlich kann auch für den Schlitten 37 eine Rollenführung vorgesehen werden, wodurch ein reibungsärmerer Lauf des Schlittens 37 erreicht würde.

Am Schlitten 37 ist ein Schwenkarm angebracht, der durch zwei an dem Schlitten 37 schwenkbar angelenkte Parallellenker 39, 40 gebildet wird, an deren anderen Enden eine Spannvorrichtung 41 angelenkt ist, die aufgrund der erwähnten Parallellenker-Ausführung bei linearen Verschiebungen des Schlittens 37 und bei Schwenkbewegungen der Schwenkarms 39, 40 immer parallel zu sich selbst verschoben wird. An der der jeweiligen Formabschnittshälfte 2 bzw. 3 zugewandten Seite der jeweiligen Spannvorrichtung 41 ist ein das entsprechende Spannprisma 19 untergreifendes Auflager 42 ausgebildet. Weiterhin sind an der Spannvorrichtung 41 zwei mit dem Kolben 43 eines Pneumatikzylinders 44 verbundene Zapfen 45 angebracht, denen jeweils zwei Kegelpfannen 46 an den Spannprismen entsprechen. Die Spannvorrichtung 41 mit dem Auflager 42 und den verschiebbaren Zapfen 45 bildet jeweils das oben bereits erwähnte Koppelorgan. Die Ankopplung einer Formabschnittshälfte 2 bzw. 3 an die Rückführungsvorrichtung erfolgt in einer Stellung der Spannvorrichtung 41, in der sich die Zapfen 45 genau über den Kegelpfannen 46 befinden. Beim Absenken der Zapfen 45 durch Ausfahren des Kolbens 43 aus dem Pneumatikzylinder 44 greifen dann die Zapfen 45 in die Kegelpfannen 46 ein und spannen das jeweilige Spannprisma 19 zwischen dem jeweiligen Auflager 42 und dem Zapfen 45 fest ein.

Zur Schwenkbewegung der Schwenkarme sind jeweils zwei Pneumatikzylinder 47, 48 in Tandemanordnung vorgesehen, wobei die Kolbenstange 49 des einen Pneumatikzylinders 47 mit ihrem freien Ende am Schlitten 37 im Bereich von dessen — in Bewegungsrichtung 4 gesehen — rückwärtigen Ende angelenkt ist, während die Kolbenstange 50 des anderen Pneumatikzylinders 48 am Schwenkarm angelenkt ist und zwar an einer von dem Parallellenker 40 in Bewegungsrichtung 4 vorspringenden Stützlager 51.

Die Bewegung des Schlittens 37 in Längsrichtung der Vorrichtung, also parallel zur Bewegungsbahn 30 der Form 6 auf der Formstrecke 12 erfolgt mittels eines langen Pneumatikzylinders 52 mit dessen Kolbenstange 53 der Schlitten 37 über einen Bügel 54 verbunden ist. Dem Pneumatikzylinder 52, sind zwei weitere Pneumatikzylinder 55, 56 in Reihenanordnung zugeordnet, die — wie weiter unten noch näher erläutert wird — zur Beschleunigung, Verzögerung und Dämpfung der Bewegungen herangezogen werden. Die Kolbenstange 57 des Pneumatikzylinders 55 ist am Pneumatikzylinder 52 angebracht. Die Kolbenstange 58 des Pneumatikzylinders 56 ist im Endbereich der Laufschiene 38 in einem von der Grundplatte 1 wegragenden Abschnitt 59 angelenkt.

An jeder Spannvorrichtung ist weiterhin ein Pneumatikzylinder 60 in vertikaler Anordnung um eine horizontale, quer zur Bewegungsrichtung 4 verlaufende Achse 61 schwenkbar angelenkt, dessen nach unten herausragende Kolbenstange 62 an einem Ende eines an der Spannvorrichtung 41 in deren unterem Bereich um eine Achse 63 angelenkten Winkelhebels 64 angelenkt ist. Am anderen Ende des Winkelhebels 64 ist eine Laufrolle 65 gelagert, die auf die Grundplatte 1 aufsetzbar ist. Der Pneumatikzylinder 60 bildet zusammen mit dem Winkelhebel 64 und der Laufrolle 65 eine Hubvorrichtung für die Spannvorrichtung 41, mittels derer die Spannvorrichtung 41 samt einer an sie angekoppelten Formabschnittshälfte 2 bzw. 3 so weit angehoben werden kann, daß die Formabschnittshälfte 2 bzw. 3 von der Grundplatte frei kommt. Dies ist für eine möglichst reibungsfreie und damit energiesparende und verschleißarme Rückführung der Formabschnittshälften 2 bzw. 3 von Nutzen.

Bei nicht mittels des Pneumatikzylinders 60 angehobener Spannvorrichtung 41 ruht diese — wenn sie darüber hinaus auch nicht an eine Formabschnittshälfte 2 bzw. 3 angekoppelt ist — über eine Stützrolle 66 auf der Grundplatte 1 auf. Über diese Stützrolle 66 stützt sich die Spannvorrichtung auf der Grundplatte ab, wenn sie längs der Bahnabschnitte 32 und 33 leer zur Position 21 bewegt wird.

Um eine Reibung zweier in Bewegungsrichtung 4 aneinanderliegender Formabschnittshälften 2 bzw. 3 beim Auseinanderfahren mittels der Keilplatte 17 weitgehend zu verringern, sind an jeder Formabschnittshälfte 2 bzw. 3 in einer Stirnseite, beispielsweise der vorderen Stirnseite 24 jeweils eine Rolle 67 drehbar gelagert, die ein kleines Stück aus dieser Stirnseite 24 der entsprechenden Formabschnittshälfte 2 bzw. 3 hervorragt. An der zugeordneten Stelle in der komplementären Stirnseite, also der rückwärtigen Stirnseite 23 ist eine angepaßte Vertiefung 68 ausgebildet, so daß auf der Formstrecke 12 jeweils der vorstehende Teil einer Rolle 67 in die entsprechende Vertiefung 68 hineinragt, so daß die einander zugewandten Stirnseiten 23 und 24 flächig und dicht aneinanderliegen. Beim Auseinanderführen der Formabschnittshälften 2, 3 eines Formabschnitts mittels der Keilplatte 17 laufen die jeweiligen Rollen 67 auf die rückwärtige Stirnseite 23 der vorangehenden Formabschnittshälfte 2 bzw. 3, wodurch die aneinander anliegenden Formabschnittshälften in Bewegungsrichtung 4 etwas auseinandergedrückt werden, so daß die Auseinanderführbewegung quer zur Bewegungsrichtung 4 praktisch reibungsfrei vonstatten gehen kann.

An der einen Führungsleiste 35 ist ein Schaltkontaktbügel befestigt, der sich oberhalb der Form 6 etwa in Bewegungsrichtung 4 im Bereich des hinteren Endes 14 der Formstrecke 12 erstreckt. Dieser Schaltkontaktbügel 69 dient als Träger für zwei Endschalter 70, 71, die in Bewegungsrichtung 4 auf dem Schaltkontaktbügel 69 einstellbar sind. Diese Endschalter 70, 71 sind handelsüblich. Ihr jeweiliges Schaltglied wird von der in Bewegungsrichtung 4 vorlaufenden oberen Kante 72 der darunter durchlaufenden Formabschnittshälfte 3 betätigt.

Wie aus den Fig. 2 bis 6 ersichtlich ist, ist im Bereich der Antriebswelle 8, also im Bereich des vorderen Endes 5 der Formstrecke 12, eine Gegenlagerung vorgesehen, durch die die Formabschnittshälften 2, 3 auf die Grundplatte 1 gedrückt werden, so daß durch das Eingreifen des Antriebsritzels 9 in die Zähne 11 der Formabschnittshälften 2, 3 letztere nicht von der Grundplatte 1 abgehoben werden können. Dies muß insbesondere deswegen vermieden werden, weil bei der in der Zeichnung dargestellten Vorrichtung das Anlegen des herzustellenden Rohres 16 an die Innenwände der Form 6 dadurch erreicht wird, daß aus der Form 6 über in den Formabschnittshälften 2, 3 angeordnete — in der Zeichnung nicht dargestellte — Kanäle Luft abgesaugt wird. Diese Absaugung erfolgt über in der Grundplatte 1 angeordnete Kanäle 73, die über entsprechende nicht dargestellte Öffnungen in der Oberfläche der Grundplatte 1 mit den in den Formabschnittshälften 2, 3 vorgesehenen Kanälen in Verbindung stehen. Ausbildung und Anordnung der Vakuumkanäle in den Formabschnittshälften ist im übrigen im einzelnen in der DE-PS 12 03 940 (entsprechend GB-PS 971 021) dargestellt und beschrieben, worauf informationshalber verwiesen werden darf. Da die Formabschnittshälften 2 bzw. 3 außerdem noch gekühlt werden, befinden sich in der Grundplatte 1 weiterhin Kühlwasserzuführkanäle 74 und Kühlwasserrücklaufkanäle 75, durch die Kühlflüssigkeit zu- und wieder abgeführt wird. Ausbildung und Anordnung der Kühlwasserkanäle in den Formabschnittshälften 2, 3 ist in der DE-OS 20 61 027 (entsprechend US-PS 3 776 679) dargestellt und beschrieben, worauf informationshalber verwiesen werden darf.

Durch das Andrücken der Formabschnittshälften 2, 3 auf die Grundplatte 1 mittels der Gegenlagerung während des Eingriffes des Antriebsritzels 9 in die Zähne 7 werden also Unterdruck- und Kühlwasserverluste vermieden.

Die erwähnte Gegenlagerung weist eine Gegendruckachse 76 auf, die in Stützen 77 gehalten ist, die wiederum an den Führungsleisten 35 mittels Schrauben 78 befestigt sind. An der Gegendruckachse 76 ist ein Lagerbock 79 angebracht, der mit einer langlochartigen Lagerausnehmung 80 auf der Gegendruckachse 76 angebracht ist. Mittels eines Justierzapfens 81 ist der Anpreßdruck einstellbar, mit dem die Formabschnittshälften 2 bzw. 3 auf die Grundplatte 1 angedrückt werden. Am in Bewegungsrichtung 4 vornliegenden Ende des Lagerbockes 79 sind zwei Andrückrollen 82 ortsfest aber drehbar gelagert, von denen je eine auf eine Formabschnittshälfte 2 bzw. 3 drückt. Am in Bewegungsrichtung 4 hinteren Ende, also an dem dem vorderen Ende 5 der Formstrecke 12 zugewandten Ende, sind am Lagerbock 79 zwei weitere Andrückrollen 83 drehbar gelagert, die selbst wiederum noch auf einem Achszapfen 84 mit in Bewegungsrichtung 4 verlaufender Achse schwenkbar gelagert sind. Hierdurch wird einerseits eine gleichmäßige Gegendrucklagerung erreicht und andererseits eine Sicherheitsschaltung ermöglicht, wobei beim Abkippen der schwenkbar gelagerten Andrückrollen 83 um die Achse des Achszapfens 84 beim nicht rechtzeitigen Nachfolgen einer Formabschnittshälfte 2 bzw. 3 ein Endschalter 85 betätigt wird, durch den dann die gesamte Vorrichtung abgeschaltet wird.

Am Ende des Bewegungsweges der Schlitten 37 im Bereich des vorderen Endes 5 der Grundplatte 1 sind den Schlitten abbremsende Stoßdämpfer 86 angebracht.

Zur Steuerung der Bewegungsabläufe sind eine Reihe von weiteren Endschaltern vorgesehen, die im Zusammenhang mit der nachfolgenden Funktionsbeschreibung erläutert werden.

Ausgegangen wird von der in Fig. 1 und Fig. 2 dargestellten Stellung der bereits über die Keilplatte 17 teilweise auseinandergefahrenen Formabschnittshälften 2 und 3, die sich also am nächsten dem hinteren Ende 14 der Formstrecke befinden. In dieser Stellung betätigt die vordere, obere Kante 72 der Formabschnittshälfte 3 den entsprechenden Schaltkontakt des Endschalters 71, wodurch der Pneumatikzylinder 44 des in dieser Position 21 bereits wartenden Koppelorgans mit Druckluft beaufschlagt wird, so daß dessen Kolbenstange 43 mit den Zapfen 45 nach unten in die Kegelpfannen 46 der jeweiligen Spannprismen 19 gedrückt werden. Da — wie aus Fig. 5 hervorgeht — in der Ruhelage zwischen dem Auflager 42 der Spannvorrichtung 41 einerseits und der Unterseite des zugeordneten Spannprismas 19 ein Spiel s von 1 bis 2 mm ist, wird durch das Andrücken der Zapfen 45 in die Kegelpfannen 46 die gesamte Spannvorrichtung um die Strecke s angehoben, bis das Auflager 42 an der Unterseite jedes Spannprismas 19 anliegt. Hierdurch kommt die Stützrolle 66 von der Oberseite der Grundplatte 1 frei, wie aus Fig. 3 ersichtlich ist. Somit ist die Ankopplung der Spannvorrichtung 41 an die entsprechende Formabschnittshälfte 2 bzw. 3 abgeschlossen. Hiernach werden über eine übliche Folgesteuerung die Pneumatikzylinder 48 und 56 derart mit Druckluft beaufschlagt, daß deren Kolbenstangen 50 bzw. 58 in die Zylinder eingefahren werden. Hierdurch bewegt sich die jeweilige Formabschnittshälfte 2 bzw. 3 auf dem gekrümmten Bahnabschnitt 22 vollständig aus der Formstrecke 12. Am Ende dieses Bahnabschnittes 22, also gleichzeitig am Anfang des langen geradlinigen Bahnabschnitts 26 der Rücklaufstrecke 25 wird der jeweilige Pneumatikzylinder 60 derart mit Druckluft beaufschlagt, daß seine Kolbenstange 62 nach unten ausfährt, wodurch unter Anheben der jeweiligen Spannvorrichtung 41 diese über die Laufrolle 65 auf der Grundplatte 1 abgestützt wird. Gleichzeitig hiermit werden die Pneumatikzylinder 52 und 56 derart mit Druckluft beaufschlagt, daß ihre Kolbenstangen 53 und 58 ausfahren, wodurch jeweils der Schlitten 37 mit der angekoppelten Formhälfte 2 bzw. 3 auf eine Geschwindigkeit von bis zu 5 m/sec beschleunigt und längs des geradlinigen Bahnabschnitts 26 in Richtung zum vorderen Ende 5 der Grundplatte 1 zurückbewegt werden.

Kurz vor Erreichen der Endstellung betätigt ein Kontaktzapfen 87 einen Endschalter 88. Der Kontaktzapfen 87 ist an der Unterseite des Bügels 54 am vorderen Ende des Schlittens 37 angebracht. Der Endschalter 88 ist jeweils längs der Grundplatte 1 auf einer entsprechenden Halteschiene 89 längseinstellbar und feststellbar angebracht. Der Endschalter 88 ist so eingestellt, daß sich der Punkt 20 am Spannprisma am Ende des geradlinigen langen Bahnabschnitts 26 und gleichzeitig am Anfang des gekrümmten Bahnabschnitts 26' befindet. Durch die Betätigung des Endschalters 88 werden die Pneumatikzylinder 47 und 48 derart mit Druckluft beaufschlagt, daß ihre Kolbenstangen 49 und 50 ausfahren. Hierdurch bewegt sich die Spannvorrichtung 41 mit der angekoppelten Formabschnittshälfte 2 bzw. 3 auf dem gekrümmten Bahnabschnitt 26' wieder zur Formstrecke 12 hin. Gleichzeitig wird der Pneumatikzylinder 60 derart mit Druckluft beaufschlagt, daß seine Kolbenstange 62 eingefahren wird. Hierdurch wird die während der Bewegung längs des Bahnabschnittes 26 von der Grundplatte 1 abgehobene Formabschnittshälfte 2 bzw. 3 wieder auf die Grundplatte 1 abgesenkt. Gleichzeitig wird ein nicht dargestelltes Ventil des Pneumatikzylinders 55 geöffnet, so daß seine Kolbenstange 57 durch die Zugkraft der aus Schlitten 37 mit Parallellenker 39, 40, Spannvorrichtung 41 und Formabschnittshälfte 2 bzw. 3 bestehende bewegte Masse abgebremst wird. Die Restdämpfung und Abbremsung erfolgt durch den jeweiligen Stoßdämpfer 86. Wenn alle Kolbenstangen 58, 57, 53 der Pneumatikzylinder 56, 55, 52 ausgefahren und der Stoßdämpfer 86 eingefahren ist, wird durch den Kontaktzapfen 87 ein diese äußerste Endlage des Schlittens 37 markierender Endschalter 90 betätigt, der ebenfalls längseinstellbar auf der Halteschiene 89 befestigt ist. Durch Betätigung dieses Endschalters wird eine Beaufschlagung der Pneumatikzylinder 52 und 56 mit Druckluft in der Weise ausgelöst, daß die Kolbenstangen 53 und 58 eingefahren werden. Hierdurch wird die Bewegung der noch an die jeweilige Spannvorrichtung 41 angekoppelten Formabschnittshälfte 2 bzw. 3 längs des Bahnabschnitts 27 bewirkt, und zwar bis die jeweilige seitlich herangeführte Formabschnittshälfte 2 bzw. 3 mit ihrer vorderen Stirnseite 24 gegen die zugewandte rückwärtige Stirnseite 23 der nächst vorderen Formabschnittshälfte 2 bzw. 3 fest anliegt. Da die geschlossene Form 6 in Bewegungsrichtung 4 mit Hilfe des Antriebsritzels 9 geschoben wird und da zwischen der Form 6 und der Grundplatte 1 hohe Reibungskräfte wirken, die noch durch die oben erläuterte Vakuum-Beaufschlagung vergrößert werden, können die Pneumatikzylinder 52 und 56 und die noch ihre Ausfahrbewegungen durchführenden Pneumatikzylinder 47 und 48 nicht die gesamte Form 6 in Bewegungsrichtung 4 verschieben, sondern lediglich die neu an das vordere Ende 5 zugeführten Formabschnittshälften 2 und 3 fest andrücken und soweit in Bewegungsrichtung 4 nachschieben, bis die in Bewegungsrichtung 4 vorlaufende Formabschnittshälfte 3 den Endschalter 70 betätigt, was zu Beginn der Auseinanderfahrbewegung der beiden zugeordneten Formabschnittshälften 2, 3 an der Keilplatte 17 erfolgt. Durch die Betätigung dieses Endschalters 70 werden die Pneumatikzylinder 44 und 47 derart mit Druckluft beaufschlagt, daß ihre Kolbenstangen 43 und 49 einfahren. Hierdurch wird zum einen die Spannvorrichtung 41 von der Formabschnittshälfte 2 bzw. 3 entkoppelt und gleichzeitig die Spannvorrichtung 41 aus der Bewegungsbahn 30 der Spannprismen 19 auf der jeweiligen Bewegungsbahn 30 über den gekrümmten Bahnabschnitt 32 herausgeschwenkt. Da die Pneumatikzylinder 52 und 56 bereits mit Druckluft in dem Sinne beaufschlagt sind, daß ihre Kolbenstangen 53 und 58 einfahren, wird der Schlitten 37 beschleunigt auf dem geradlinigen Bahnabschnitt 33 wieder bis in die Position 21 bewegt. Die Abbremsung dieser Vorfahrtbewegung, d.h. die Dämpfung des Schlittens 37 und der Spannvorrichtung 41 wird durch das Luftpolster im Pneumatikzylinder 56 bewirkt. Der Schlitten 37 muß sich in der Position 21 in Ruhestellung befinden, bevor das nächste Paar Formabschnittshälften 2, 3 über die Keilplatte 17 bis in diese Position verschoben wird und unter Betätigung des Endschalters 71 den nächsten Umlauf auslöst.

Der Vollständigkeit halber sei darauf hingewiesen, daß insbesondere in den Fig. 3, 5 und 6 die die Querrillen eines Rohres 16 formenden Arbeitsflächen 91 an der Innenseite der Formabschnittshälften 2 bzw. 3 erkennbar sind.

## Ansprüche

1. Vorrichtung zur Herstellung von Rohren (16) aus thermoplastischem Kunststoff mit Querprofilierung, bei der das Rohr (16) im plastischen Zustand aus einer Spritzdüse (15) austritt, mit im Anschluß an die Spritzdüse (15) in zwei einander gegenüberliegenden Reihen angeordneten, im Kreislauf geführten Formabschnittshälften (2, 3), die sich paarweise entlang einer geraden Formstrecke (12) zu einer geschlossenen Hohlform ergänzen, die an ihrer Innenseite die Querprofilierung formende Arbeitsflächen (91) aufweist, wobei jede der nicht miteinander verbundenen Formabschnittshälften (2, 3) einer Reihe mittels einer Rückführungsvorrichtung am hinteren Ende (14) der Formstrecke (12) im wesentlichen quer zur Bewegungsrichtung (4) auf der Formstrecke (12) aus der Formstrecke (12) herausgeführt und auf einer Rücklaufstrecke (25) zum vorderen Ende (5) der Formstrecke (12) zurückgeführt und dort wieder in die Formstrecke (12) hineingeführt und an die jeweils vorlaufende Formabschnittshälfte (2, 3) angesetzt wird, dadurch gekennzeichnet, daß die Rückführungsvorrichtung als Schlitten (37) mit einem Schwenkarm (39, 40) ausgebildet ist, wobei am freien Ende dieses Schwenkarms ein Koppelorgan zur lösbaren Ankoppelung an einer Formabschnittshälfte (2, 3) angeordnet ist, und wobei Antriebe zum durchgehenden Bewegen des Koppelorgans vom hinteren Ende (14) der Formstrecke (12) zu deren vorderem Ende (5) und zurück vorgesehen sind.

2. Vorrichtung nach Anspruch 1, *dadurch gekennzeichnet,* daß der Schwenkarm als Parallellenker (39, 40) ausgebildet ist, an deren vorderem Ende eine an der jeweiligen Formabschnittshälfte (2, 3) ankoppelbare Spannvorrichtung angelenkt ist.

3. Vorrichtung nach Anspruch 1 oder 2, *dadurch gekennzeichnet,* daß der Schlitten (37) längs einer Laufschiene (38) verschiebbar geführt und mittels mindestens eines Pneumatikzylinders (52, 55, 56) antreibbar ist.

4. Vorrichtung nach einem der Ansprüche 1 bis 3, *dadurch gekennzeichnet,* daß der Schwenkarm (39, 40) mittels mindestens eines Pneumatikzylinders (47, 48) schwenkantreibbar ist.

5. Vorrichtung nach Anspruch 3 oder 4, *dadurch gekennzeichnet,* daß als Antrieb für den Schlitten (37) und/oder den Schwenkarm (39, 40) jeweils mindestens zwei hintereinander angeordnete Pneumatikzylinder (52, 55, 56; 47, 48) vorgesehen sind.

6. Vorrichtung nach einem der Ansprüche 1 bis 5, *dadurch gekennzeichnet,* daß an der Spannvorrichtung (41) ein Pneumatikzylinder (44) vorgesehen ist, mit dessen Kolbenstange (43) Zapfen (45) verbunden sind, denen an der Außenseite der jeweiligen Formabschnittshälfte (2, 3) ausgebildete Kegelpfannen (46) entsprechen.

7. Vorrichtung nach Anspruch 6, *dadurch gekennzeichnet,* daß die Kegelpfannen (46) in an der Außenseite der jeweiligen Formabschnittshälfte (2, 3) ausgebildeten Spannprismen (19) angeordnet sind.

8. Vorrichtung nach Anspruch 7, *dadurch gekennzeichnet,* daß an der Spannvorrichtung (41) ein das jeweilige Spannprisma (19) untergreifendes Auflager (42) ausgebildet ist.

9. Vorrichtung nach einem der Ansprüche 1 bis 8, *dadurch gekennzeichnet,* daß an der Spannvorrichtung (41) eine als Hubvorrichtung dienende, mittels eines Pneumatikzylinders (60) über einen Winkelhebel (64) auf die Grundplatte schwenkbare Laufrolle (65) angeordnet ist.

10. Vorrichtung nach einem der Ansprüche 1 bis 9, *dadurch gekennzeichnet,* daß am hinteren Ende (14) der Formstrecke (12) ein die Formabschnittshälften (2, 3) auseinanderführendes, mit an den Formabschnittshälften (2, 3) angeordneten Schrägflächen (18) zusammenwirkendes Keilstück angeordnet ist.

11. Vorrichtung nach Anspruch 10, *dadurch gekennzeichnet,* daß die Keilflächen des Keilstücks mit Rollen (36) versehen sind.

12. Vorrichtung nach einem der Ansprüche 1 bis 11, *dadurch gekennzeichnet,* daß die Formabschnittshälften (2, 3) auf der Formstrecke (12) an ihrer Außenseite durch jeweils eine Führungsleiste (35) geführt sind.

13. Vorrichtung nach einem der Ansprüche 1 bis 11, *dadurch gekennzeichnet,* daß die Formabschnittshälften (2, 3) auf der Formstrecke (12) an ihrer Außenseite durch Führungsrollen (13) geführt sind.

14. Vorrichtung nach einem der Ansprüche 1 bis 13, *dadurch gekennzeichnet,* daß an der in Bewegungsrichtung (4) auf der Formstrecke (12) vorderen Stirnseite (24) jeder Formabschnittshälfte (2, 3) in der Nähe ihres äußeren Randes eines Rolle (67) angeordnet ist, der jeweils in der zugeordneten rückwärtigen Stirnseite (23) eine Vertiefung (68) zugeordnet ist, in die die Rolle bei geschlossener Form (6) auf der Formstrecke (12) eingreift.

15. Vorrichtung nach einem der Ansprüche 1 bis 14, *dadurch gekennzeichnet,* daß am vorderen Ende (5) der Formstrecke (12) ein über Andrückrollen (82, 83) auf der Oberseite der Formabschnittshälften (2, 3) eines Formabschnitts aufliegender Lagerbock (79) angeordnet ist.

16. Vorrichtung nach Anspruch 15, *dadurch gekennzeichnet,* daß die dem vorderen Ende (5) der Formstrecke (12) zugewandten Andrückrollen (83) um eine in Bewegungsrichtung (4) der Form (6) liegende Achse schwenkbar gelagert und mit einem Endschalter (85) zum Abschalten der Vorrichtung gekoppelt sind.

17. Vorrichtung nach einem der Ansprüche 1 bis 16, *dadurch gekennzeichnet,* daß die Rückführbahn für jede Formabschnittshälfte (2, 3) einen von der Formstrecke (12) nach außen und in Bewegungsrichtung (4) der Formstrecke (12) gekrümmten Bahnabschnitt (22), einen geradlinig entgegen der Bewegungsrichtung (4) der Formstrecke (12) verlaufenden Bahnabschnitt (26), einen sich im Bereich des vorderen Endes (5) der Formstrecke an den geradlinigen Bahnabschnitt (26) anschließenden, entgegen der Bewegungsrichtung (4) gekrümmten Bahnabschnitt (26'), einen sich hieran anschließenden geradlinig und unter einem spitzen Winkel zur Bewegungsrichtung (4) der Formstrecke (12) verlaufenden Bahnabschnitt (27) und einen sich von dessen Endpunkt (28) geradlinig in Bewegungsrichtung (4) der Formstrecke (12) erstreckenden Bahnabschnitt (29) besteht.

18. Vorrichtung nach Anspruch 17, *dadurch gekennzeichnet,* daß das Koppelorgan auf einem eingangs nach außen und in Bewegungsrichtung (4) der Formstrecke (12) gekrümmten Bahnabschnitt (32) und anschließend auf einem geradlinigen Bahnabschnitt (33) bis zum hinteren Ende (14) der Formstrecke (12) rückführbar ist.

19. Vorrichtung nach Anspruch 18, *dadurch gekennzeichnet,* daß die Pneumatikzylinder (52, 55, 56) für den geradlinigen Antrieb des Schlittens (37), die Pneumatikzylinder (47, 48) für den Schwenkantrieb des Schwenkarms (39, 40) und der Pneumatikzylinder (44) für die Ankopplung einer Formabschnittshälfte (2, 3) an eine Spannvorrichtung (41) und gegebenenfalls der Pneumatikzylinder (60) zum Anheben der Spannvorrichtung (41) mit einer Formhälfte (2, 3) über Endschalter (70, 71, 88, 90) zur Erzeugung der einzelnen Bahnabschnitte und zum An- und Abkuppeln einer Formabschnittshälfte (2, 3) an eine Spannvorrichtung (41) ansteuerbar sind.

20. Vorrichtung nach einem der Ansprüche 1 bis 19, *dadurch gekennzeichnet,* daß im Bereich des vorderen Endes (5) der Formstrecke (12) am Ende der Bewegungsbahn des Schlittens (37) mindestens ein Stoßdämpfer (86) angeordnet ist.

21. Vorrichtung nach einem der Ansprüche 1 bis 20, *dadurch gekennzeichnet,* daß von den zum Antrieb des Schlittens (37) dienenden Pneumatikzylindern (52, 55, 56) mindestens ein Pneumatikzylinder (55) als Bremszylinder dient.

**Claims**

1. Apparatus for the manufacture of tubes (16) from thermoplastic material having cross grooving or profiling, wherein the tube (16) emerges from an extrusion nozzle (15) in a plastic state, comprising circulating mould halves (2, 3) which are arranged in two rows opposite one another adjacent to the extrusion nozzle (15) and which form, along a straight moulding run (12), complementary pairs of mould halves to provide a closed hollow mould, the inner side of which comprises working faces (91) forming the cross grooving or profiling, each of the mould halves (2, 3) of a row which are not joined together being guided out of the moulding run (12) by a return means at the rear end (14) of the moulding run (12), substantially at right angles to the direction of movement (4) on the said run (12), and being guided back to the front end (5) of the moulding run (12) along a return run (25) and, at this point, being guided back into the moulding run (12) and being attached to each advancing mould half (2, 3), characterised in that the return means is in the form of a carriage (37) having a pivotable arm (39, 40), a coupling element being provided on the end of the said pivotable arm for detachable coupling to a mould half (2, 3), and drives being provided for the continuous movement of the coupling element from the rear end (14) to the front end (5) of the moulding run (12), and back.

2. Apparatus according to Claim 1, characterised in that the pivotable arm means is in the form of parallel linkages (39, 40), pivotably connected to the front ends of which is a gripper which can be coupled to each mould half (2, 3).

3. Apparatus according to Claim 1 or 2, characterised in that the carriage (37) is slidably guided along a track (38) and can be driven by means of at least one pneumatic cylinder (52, 55, 56).

4. Apparatus according to any one of Claims 1 to 3, characterised in that the pivotable arm (39, 40) can be pivotably driven by means of at least one pneumatic cylinder (47, 48).

5. Apparatus according to Claim 3 or 4, characterised in that at least two pneumatic cylinders (52, 55, 56 ; 47, 48) in tandem arrangement are provided in each case as a drive for the carriage (37) and/or the pivotable arm (39, 40).

6. Apparatus according to any one of Claims 1 to 5, characterised in that there is provided on the gripper (41) a pneumatic cylinder (44), to the piston rod (43) of which are connected pins (45) which cooperate with conical sockets (46) formed on the outside of each mould half (2, 3).

7. Apparatus according to Claim 6, characterised in that the conical sockets (46) are disposed in cleats (19) formed on the outside of each mould half (2, 3).

8. Apparatus according to Claim 7, characterised in that a jaw or support (42), which reaches underneath each cleat (19), is formed on the gripper (41).

9. Apparatus according to any one of Claims 1 to 8, characterised in that a roller (65), which acts as a lifting means and can be pivoted by means of a pneumatic cylinder (60) on to the base plate by way of an angled lever (64), is provided on the gripper (41).

10. Apparatus according to any one of Claims 1 to 9, characterised in that a wedge, which separates the mould halves (2, 3) and cooperates with oblique surfaces (18) on the mould halves (2, 3), is disposed at the rear end (14) of the moulding run (12).

11. Apparatus according to Claim 10, characterised in that the wedge surfaces of the wedge are provided with rollers (36).

12. Apparatus according to any one of Claims 1 to 11, characterised in that each mould half (2, 3) is guided on its outside along a moulding run (12) by a guide bracket (35).

13. Apparatus according to any one of Claims 1 to 11, characterised in that the mould halves (2, 3) are guided on their outside along a moulding run (12) by guide rollers (13).

14. Apparatus according to any one of Claims 1 to 13, characterised in that a roller (67) is disposed on the face (24) of each mould half (2, 3), which is the front side in the direction of movement (4) on the moulding run (12), in the vicinity of the outer edge of each mould half, each roller being associated with a recess (68) in the associated rear face (23), in which recess the roller engages when the mould (6) on the moulding run (12) is closed.

15. Apparatus according to any one of Claims 1 to 14, characterised in that a bearing block (79), which is supported on the upper sides of the mould halves (2, 3) of a mould via pressure rollers (82, 83), is disposed at the front end (5) of the moulding run (12).

16. Apparatus according to Claim 15, characterised in that the pressure rollers (83) facing the front end (5) of the moulding run (12) are mounted so as to be pivotable about an axis lying in the direction of movement (4) of the mould (6) and are connected to a limit switch (85) for switching off the apparatus.

17. Apparatus according to any one of Claims 1 to 16, characterised in that the return track for each mould half (2, 3) consists of a track section (22) which is curved outwards from the moulding run (12) and in the direction of movement (4) of the moulding run (12), a rectilinear track section (26) which extends in the opposite direction to the direction of movement (4) of the moulding run (12), a track section (26') which follows the rectilinear track section (26) in the region of the front end (5) of the moulding run and which is curved in the opposite direction to the direction of movement (4), a following rectilinear track section (27) which extends at an acute angle to the direction of movement (4) of the moulding run (12), and a track section (29) which extends from the end point (28) of the said track section (27) in a straight line in the direction of movement (4) of the moulding run (12).

18. Apparatus according to Claim 17, characterised in that the coupling element can be returned along a track section (32), which is initially curved outwards and in the direction of movement (4) of the moulding run (12), and then along a rectilinear track section (33) as far as the rear end (14) of the moulding run (12).

19. Apparatus according to Claim 18, characterised in that the pneumatic cylinders (52, 55, 56) for the rectilinear drive of the carriage (37), the pneumatic cylinders (47, 48) for the pivotable drive of the pivotable arm means (39, 40) and the pneumatic cylinder (44) for coupling a mould half (2, 3) to a gripper (41) and, optionally, the pneumatic cylinder (60) for raising the gripper (41) and a mould half (2, 3) can be controlled via limit switches (70, 71, 88, 90) to produce the individual track sections and to couple a mould half (2, 3) to and uncouple it from a gripper (41).

20. Apparatus according to any one of Claims 1 to 19, *characterised in that* at least one shock absorber (86) is disposed in the region of the front end (5) of the moulding run (12) at the end of the path of movement of the carriage (37).

21. Apparatus according to any one of Claims 1 to 20, *characterised in that* at least one (55) of the pneumatic cylinders (52, 55, 56) which serve to drive the carriage (37) acts as a braking cylinder.

**Revendications**

1. Installation pour la fabrication de tuyaux transversalement ondulés (16), en matière thermoplastique, dans laquelle le tuyau (16) sort à l'état plastique d'une tuyère (15), avec, faisant suite à la tuyère (15), des moitiés de sections de moule (2, 3) disposées en deux séries opposées et conduites suivant un circuit, qui se complètent deux à deux le long d'une trajectoire de moulage rectiligne (12) pour former un moule creux fermé présentant intérieurement des surfaces de travail (91) qui forment l'ondulation transversale, chacune des moitiés de sections de moule (2, 3), non reliées entre elles, d'une série, étant conduite hors de la trajectoire de moulage (12) au moyen d'un dispositif de guidage de rappel à l'extrémité arrière (14) de la trajectoire de moulage (12), en principe transversalement à la direction (4) du mouvement, sur la trajectoire de moulage (12), et étant ramenée, sur une trajectoire de retour (25), à l'extrémité avant (5) de la trajectoire de moulage (12) et étant réintroduite en cet endroit, dans la trajectoire de moulage (12), et appliquée à la moitié de section de moule (2, 3) chaque fois précédente, caractérisée en ce que le dispositif de guidage de rappel est conformé en traîneau (37) avec un bras pivotant (39, 40), où, à l'extrémité libre de ce bras pivotant est disposé un organe d'accouplement pour en réaliser l'accouplement libérable à une moitié de section de moule (2, 3) et où on a prévu des dispositifs d'entraînement pour un mouvement continu de l'organe d'accouplement de l'extrémité arrière (14) de la trajectoire de moulage (12) à son extrémité avant (5), et inversement.

2. Installation suivant la revendication 1, caractérisée en ce que le bras pivotant est conformé en leviers de direction parallèles (39, 40) à l'extrémité avant desquels est articulé un dispositif de serrage accouplable à la moitié de section de moule (2, 3) respective.

3. Installation suivant l'une quelconque des revendications 1 et 2, caractérisée en ce que le traîneau (37) est guidé de manière à pouvoir se déplacer le long d'une voie de parcours (38) et peut être entraîné au moyen d'au moins un cylindre pneumatique (52, 55, 56).

4. Installation suivant l'une quelconque des revendications 1 à 3, caractérisée en ce que le bras pivotant (39, 40) peut être amené à pivoter à l'aide d'au moins un cylindre pneumatique (47, 48).

5. Installation suivant l'une quelconque des revendications 3 et 4, caractérisée en ce que, comme moyens d'entraînement pour les traîneaux (37) et/ou le bras pivotant (39, 40), on a prévu chaque fois au moins deux cylindres pneumatiques disposés l'un derrière l'autre (52, 55, 56 ; 47, 48).

6. Installation suivant l'une quelconque des revendications 1 à 5, caractérisée en ce que sur le dispositif de serrage (41) est prévu un cylindre pneumatique (44) à la tige de piston (43) duquel sont reliés des tétons (45) auxquels correspondent des cuvettes coniques (46) formées sur la face extérieure des moitiés de sections de moule respectives (2, 3).

7. Installation suivant la revendication 6, caractérisée en ce que les cuvettes coniques (46) sont prévues dans des prismes de serrage (19) formés à la face extérieure des moitiés de sections de moule respectives (2, 3).

8. Installation suivant la revendication 7, caractérisée en ce que sur le dispositif de serrage (41) est formé un appui (42) engagé en dessous de chaque prisme de serrage (19).

9. Installation suivant l'une quelconque des revendications 1 à 8, caractérisée en ce que sur le dispositif de serrage (41) est agencé un galet de roulement (65) servant de dispositif de levage et pouvant être amené à pivoter sur la plaque de base au moyen d'un cylindre pneumatique (60) par l'intermédiaire d'un levier coudé (64).

10. Installation suivant l'une quelconque des revendications 1 à 9, caractérisée en ce qu'à l'extrémité arrière (14) de la trajectoire de moulage est disposée une pièce en forme de coin pour séparer l'une de l'autre les moitiés de sections de moule (2, 3), et coopérant avec des surfaces obliques (18) prévues sur les moitiés de sections de moule (2, 3).

11. Installation suivant la revendication 10, caractérisée en ce que les surfaces de coin de la pièce en forme de coin sont pourvues de galets (36).

12. Installation suivant l'une quelconque des revendications 1 à 11, caractérisée en ce que les moitiés de sections de moule (2, 3) sont guidées sur la trajectoire de moulage (12), à leurs côtés extérieurs, par chaque fois une réglette de guidage (35).

13. Installation suivant l'une quelconque des revendications 1 à 11, caractérisée en ce que les moitiés de sections de moule (2, 3) sont guidées sur la trajectoire de moulage (12), à leurs côtés extérieurs, par des galets de guidage (13).

14. Installation suivant l'une quelconque des revendications 1 à 13, caractérisée en ce qu'à la face frontale (24) située à l'avant dans le sens (4) du mouvement, sur la trajectoire de moulage (12), de chaque moitié de section de moule (2, 3), est prévu, à proximité de son bord extérieur, un galet (67) auquel est associé chaque fois un renfoncement (68) dans la face frontale arrière (23) associée, renfoncement dans lequel s'engage le galet lorsque le moule (6) est fermé sur la trajectoire de moulage (12).

15. Installation suivant l'une quelconque des revendications 1 à 14, caractérisée en ce qu'à l'extrémité avant (5) de la trajectoire de moulage (12) est prévu un palier (79) s'appliquant par des galets de pression (82, 83) sur la face supérieure des moitiés de sections de moule (2, 3).

16. Installation suivant la revendication 15, caractérisée en ce que les galets de pression (83) orientés vers l'extrémité avant (5) de la trajectoire de moulage (12) sont montés à pivotement autour d'un axe se trouvant dans la direction (4) du mouvement du moule (6) et sont couplés à un interrupteur de fin de course (85) pour le dégagement de l'installation.

17. Installation suivant l'une quelconque des revendications 1 à 16, caractérisée en ce que la voie de rappel pour chaque moitié de section de moule (2, 3) comprend une section de voie (22) partant de la trajectoire de moulage (12) vers l'extérieur et courbée dans le sens (4) du mouvement de la trajectoire de moulage (12), une section de voie (26) s'étendant en ligne droite à l'encontre du sens du mouvement (4), de la trajectoire de moulage (12), une section (26') courbée à l'encontre du sens (4) du mouvement, se raccordant, dans la région de l'extrémité avant (5) de la trajectoire de moulage, à la section de voie rectiligne (26), une section de voie (27) s'y raccordant en ligne droite et s'étendant suivant un angle aigu par rapport au sens (4) du mouvement de la trajectoire de moulage (12), et un tronçon de voie (29) s'étendant de son point d'extrémité (28) en ligne droite, dans le sens (4) du mouvement de la trajectoire de moulage.

18. Installation suivant la revendication 17, caractérisée en ce que l'organe d'accouplement peut être ramené sur une section de voie (32) courbée au commencement vers l'extérieur et dans le sens (4) du mouvement de la trajectoire de moulage (12) et ensuite sur une section de voie rectiligne (33) jusqu'à l'extrémité arrière (14) de la trajectoire de moulage (12).

19. Installation suivant la revendication 18, caractérisée en ce que les cylindres pneumatiques (52, 55, 56) pour l'entraînement rectiligne du traîneau (37), les cylindres pneumatiques (47, 48) pour le mouvement de pivotement du bras pivotant (39, 40) et le cylindre pneumatique (44) pour l'accouplement d'une moitié de section de moule (2, 3) à un dispositif de serrage (41), et éventuellement un cylindre pneumatique (60) pour soulever le dispositif de serrage (41) avec une moitié de moule (23), peuvent être commandés par des interrupteurs de fin de course (70, 71, 88, 90) en vue du parcours des diverses sections de voies individuelles et pour accoupler une moitié de section de moule (2, 3) à un dispositif de serrage (41) et l'en découpler.

20. Installation suivant l'une quelconque des revendications 1 à 19, caractérisée en ce que, dans la région de l'extrémité avant (5) de la trajectoire de moulage (12), on a prévu, à l'extrémité de la trajectoire du traîneau (37), au moins un amortisseur de chocs (86).

21. Installation suivant l'une quelconque des revendications 1 à 20, caractérisée en ce que, parmi les cylindres pneumatiques (52, 55, 56) servant au mouvement du traîneau (37), au moins l'un des cylindres pneumatiques (55), sert de cylindre de freinage.

Fig.1

1 / 4

*Fig.2*

Fig.3

Fig.4

Fig.5

_Fig.6_

_Fig.7_